# EUROPÄISCHE PATENTSCHRIFT

(11) **EP 1 031 278 B1**
(45) Veröffentlichungstag und Bekanntmachung des Hinweises auf die Patenterteilung: **16.01.2002**
(21) Anmeldenummer: 00101728.4
(22) Anmeldetag: 28.01.2000
(51) Int. Cl.: A01K 13/00

(54) **Vorrichtung zum Trocknen von Tieren, insbesondere Pferden**
Device for drying animals, in particular horses
Séchoir des animaux, en particulier de chevaux

(30) Priorität: 23.02.1999 DE 19907876
(43) Veröffentlichungstag der Anmeldung: 30.08.2000
(73) Patentinhaber: Kampmann GmbH, 49811 Lingen (Ems) (DE)
(72) Erfinder: Kampmann, Heinrich, 49808 Lingen (Ems) (DE)
(74) Vertreter: Möller, Friedrich, Dipl.-Ing.

(56) Entgegenhaltungen:
- DE-A- 2 711 222
- GB-A- 2 137 466
- GB-A- 2 144 317
- US-A- 3 884 191
- US-A- 4 934 069

## Beschreibung

Die Erfindung betrifft eine Vorrichtung zum Trocknen von Tieren, insbesondere Pferden, Ponys oder dergleichen.

Tiere, und zwar vor allem Pferde, werden vielfach gewaschen oder geduscht. Vor allem Sportpferde, müssen nach der täglichen Trainingsarbeit geduscht werden. Aschließend müssen die Pferde zur Vermeidung von Erkältungen, Lungenentzündungen oder ähnlichen Erkrankungen sorgfältig getrocknet werden. Dabei ist es wesentlich, dass diese Trocknung nicht nur oberflächlich auf dem Rücken oder an den Seiten erfolgt, sondern insbesondere auch unter dem Bauch, der eine Problemzone darstellt.

Bisher bekannt ist eine Trockenmethode, bei der die Pferde zunächst mit Schweissmessern abgezogen werden (das oberflächige Wasser wird dadurch entfernt) und danach mit einer Abschwitzdecke eingedeckt werden. Diese bekannte manuelle Art der Trocknung ist mit erheblichen Mühen verbunden.

Aus der US-A-4 934 069 ist eine Trocknungsvorrichtung für zum Beispiel Pferde bekannt, die hinter dem Pferd angeordnet wird und über Luftauslässe verfügt, die auf das Hinterteil des Pferd gerichtet sind. Die bekannte Trocknungsvorrichtung verfügt über eine Gehäuse, in dem ein Heisslufterzeuger und verstellbare Luftverteilungsmittel zur Bildung des Luftauslasses angeordnet sind. Die vom Warmlufterzeuger gebildete Warmluft kann unkontrolliert aus dem Luftauslass austreten, wodurch eine gezielte Trocknung nicht gewährleistet ist. Vor allem kann insbesondere das Hinterteil des Pferds Luftströmungen unterschiedlicher Temperatur ausgesetzt werden, was vom Pferd natur-gemäß als unangenehm empfunden wird, wodurch es eine Scheu vor der bekannten Trocknungseinrichtung entwickeln kann.

Der Erfindung liegt nun die Aufgabe zugrunde, eine Vorrichtung zu schaffen, mit der Tiere, insbesondere Pferde, Ponys oder dergleichen, einfach zuverlässig, kurzzeitig, kostengünstig und vor allem schonend getrocknet werden können.

Eine Vorrichtung zur Lösung dieser Aufgabe weist die Merkmale des Anspruchs 1 auf. Dadurch, dass ein Gehäuse der Vorrichtung an seiner Unterseite mit Luftaustrittsöffnungen versehen ist, entsteht eine kompakte Vorrichtung. Das vor allem deshalb, weil die Luftaustrittsöffnungen integraler Bestandteil des Gehäuses sein können. Des weiteren schützt das Gehäuse die darin angeordneten Lufterhitzer. Außerdem werden die zu trocknenden Tiere vor einer direkten Beeinflussung durch die Lufterhitzer geschützt. Durch die Anordnung des jeweiligen Luftverteilungsmittels in Strömungsrichtung gesehen vor den Lufterhitzern wird die von Luftströmungserzeugem wie beispielsweise Ventilatoren stammende Luft gleichmäßig verteilt an den Lufterhitzern vorbeigeführt, wodurch aus den Luftaustrittsöffnungen gleichmäßig verteilt Warmluft mit im Wesentlichen gleicher Temperatur austritt. Dadurch wird eine gleichmäßige Trocknung erzielt und auch verhindert, dass manche Stellen des zu trocknenden Tieres mit zu kalter Luft getrocknet werden, was zu Zugerscheinungen und daraus resultierenden Erkrankungen des Tieres führen könnte. Durch die gleichmäßige Erwärmung der Luft lässt sich die Temperatur der aus der Vorrichtung ausströmenden Warmluft zuverlässig regeln durch wenige oder auch nur einen Temperaturfühler. Der gleichmäßige Warmluftaustritt führt auch dazu, dass die Luft geräuschlos aus dem Gehäuse austritt. Der geräuschlose Luftaustritt ist wichtig, damit die Tiere vor dem Trocknen keine Scheu entwickeln und statt dessen die Trocknung als angenehm empfinden.

Eine weitere Vorrichtung zur Lösung der eingangs genannten Aufgabe weist die Merkmale des Anspruchs 14 auf. Dadurch entsteht ein Trockenraum unter dem Gehäuse, in dem mindestens teilweise das zu trockene Tier angeordnet wird, wodurch die zur Trocknung dienende Luft ungehindert an alle Seiten des Tiers gelangen kann, und zwar auch an kritische Stellen.

Die Luftverteilungsmittel sind im einfachsten Falle als sich über alle oder einen Teil der Lufterhitzer erstreckende Luftverteilungsbleche ausgebildet. Die Luftverteilungsbleche weisen eine Perforation zum Durchtritt der Luft auf. Die Perforation ist vorzugsweise gebildet aus gleichmäßig auf die Fläche der Luftverteilungsbleche verteilte Durchgangslöcher mit beliebigen Querschnitten. Die Durchgangslöcher können rund, mehreckig, oval oder elliptisch sein. Ein solches Luftverteilungsblech lässt sich einfach aus handelsüblichen Siebblechen bilden.

Des weiteren ist vorgesehen, die Unterseite des Gehäuses mit unterschiedlichen Luftauslassöffnungen zu versehen. Diese Luftauslassöffnungen sind vorzugsweise in einer unteren Bodenwand des Gehäuses angeordnet. Dadurch sind keine zusätzlichen Einbauten für die Aufnahme der Luftaustrittsöffnungen erforderlich.

Bei einer bevorzugten Ausgestaltung der Vorrichtung ist die Bodenwandung des Gehäuses mit unterschiedlichen Luftaustrittsöffnungen versehen. Vorzugsweise sind gegenüberliegende Längsrandbereiche der Bodenwandung des Gehäuses mit länglichen Luftaustrittsschlitzen versehen. Es reicht aus, wenn in jedem der beiden Längsrandbereiche der Bodenwandung ein Luftaustrittsschlitz vorgesehen ist. Die Luftaustrittsschlitze erzeugen an gegenüberliegenden Seiten der Vorrichtung flächige Warmluftschleier, die die Warmluft, insbesondere die aus den zwischen den Luftaustrittsschlitzen angeordneten Luftaustrittsöffnungen austretende Warmluft, von der Umgebungsluft abschirmen, wodurch es möglich ist, die Tiere vom Rücken bis zu den Füßen mit Warmluft zu trocknen.

Vorzugsweise sind die im Bereich zwischen den Luftaustrittsschlitzen der Bodenwandung angeordnete Luftaustritts.öffnungen als Luftaustrittslöcher ausgebildet. Die Luftaustrittslöcher sind zweckmäßigerweise gleichmäßig auf den Bereich der Bodenwandung zwischen den gegenüberliegenden Luftaustrittsschlitzen verteilt angeordnet. Die Bodenwandung des Gehäuses ist dadurch zwischen den länglichen Luftaustrittsschlitzen siebartig ausgebildet. Die Luftaustrittslöcher sind in ihren Abmessungen und ihren Abständen so bemessen, daß im Bereich der Luftaustrittslöcher, also zwischen den länglichen Luftaustrittsschlitzen, ein im wesentlichen geschlossener Warmluftteppich austritt, der den Raum zwischen den von den länglichen Luftaustrittsschlitzen gebildeten seitlichen Luftschleiern ausfüllt, so daß die Warmluft von der Vorrichtung über dem Tier bis zum Boden strömen kann und dabei das Tier vollständig mit einem gleichmäßigen Warmluftstrom getrocknet wird. Die Warmluft strömt dabei von oben nach unten gleichmäßig am Tier vorbei. Mit Feuchtigkeit angereicherte und gegebenenfalls abgekühlte Warmluft kann über die luftschleierlosen Stirnseiten des zwischen den seitlichen Luftschleiern gebildeten Trocknungsraums abströmen.

Bei einer bevorzugten Ausgestaltung der Erfindung sind die Lufterhitzer als Konvektoren, und zwar insbesondere Plattenkonvektoren, ausgebildet. Solche Lufterhitzer haben sich im Heizungsbau bewährt. Für den Einsatz in der Vorrichtung zum Trocknen von Tieren eignen sich Plattenkonvektoren vor allem deshalb, weil ihre Wärmetauscherplatten eine verhältnismäßig große Fläche zum Erwärmen der daran vorbeiströmenden Luft aufweisen und darüber hinaus die Platten der Konvektoren zur Vergleichmäßigung und Beruhigung der Luftströmung beitragen. Vorzugsweise sind mehrere längliche Plattenkonvektoren vorgesehen, die parallelverlaufend in Längsrichtung der Vorrichtung orientiert sind und dicht aneinanderliegen, ohne sich jedoch zu berühren. Auf diese Weise wird eine gleichmäßige Erwärmung der Luft über dem gesamten Bereich der Bodenwandung der Vorrichtung erreicht. Die Bodenwandung befindet sich in Strömungsrichtung der Luft gesehen kurz unterhalb der nebeneinander angeordneten Konvektoren, so daß nach dem Vorbeiströmen an den Konvektoren die erwärmte Luft sofort ohne nennenswerte Energieverluste aus der Vorrichtung aufströmen kann.

Das Energieträgermedium (beispielsweise Warmwasser) wird über einen gemeinsamen Warmwasserzulauf allen Konvektoren zugeführt. Strömungstechnisch sind dazu die Konvektoren parallel geschaltet. Es ist aber auch denkbar, mehrere Vorlaufleitungen vorzusehen und damit verschiedene Gruppen parallel geschalteter Konvektoren mit einem Wärmeträgermittel zu versorgen. Beispielsweise können die den länglichen Luftaustrittsschlitzen zugeordneten Konvektoren einem separaten Warmwasservorlauf zugeordnet sein, während die übrigen Konvektoren, die den Luftaustrittslöchern zugeordnet sind, gemeinsam über einen weiteren Warmwasservorlauf mit Wärmeenergie versorgt werden können.

Vorzugsweise erfolgt die Abfuhr abgekühlten Wärmeträgermediums aus den Konvektoren genauso wie die Zufuhr warmen Wärmeträgermediums. Dabei ist weiterhin vorgesehen, den Zulauf einer unteren, zu den Luftaustrittsöffnungen weisenden Hälfte der Konvektoren zuzuordnen, während der Rücklauf einer oberen Hälfte der Konvektoren zugeordnet ist. Es erfolgt so eine zweistufige Erwärmung der Luft, nämlich zuerst ein Vorwärmen an der oberen kälteren Hälfte der Konvektoren und anschließend eine weitere Erwärmung an der unteren, wärmeren Hälfte der Konvektoren. Die Temperaturdifferenz zwischen der zu erwärmenden Luft und des Wärmeträgermediums in den Konvektoren wird dadurch vergleichmäßigt, wobei die obere kalte Luft noch von der Restenergie des Wärmeträgermediums in den Konvektoren erwärmt wird und dadurch eine bessere Ausnutzung der Wärmeenergie des Wärmeträgermediums erfolgt.

Es ist denkbar, die den Luftaustrittslöchern zugeordneten Konvektoren ganz oder teilweise in mindestens einer Kammer anzuordnen, die mit der Bodenwandung des Gehäuses verbundene umlaufende aufrechte Seitenwandungen um die den Luftaustrittslöchern zugeordneten Konvektoren bildet. Dadurch wird ein Luftaustausch mit den seitlichen Luftaustrittsschlitzen zugeordneten Konvektoren verhindert, wodurch den länglichen Luftaustrittsschlitzen Luft gegebenenfalls unter einem größeren Druck zugeführt werden kann zur Erzeugung eines stabileren Luftschleiers auf gegenüberliegenden Seiten der Vorrichtung. Demgegenüber kann die Luft aus den Luftaustrittsöffnungen mit geringerem Druck austreten, wodurch diese direkt auf den Körper der Tiere einwirkende Luft eine geringere Strömungsgeschwindigkeit aufweist. Dadurch wird zuverlässig vermieden, daß die'Tiere einer Zugluft ausgesetzt werden.

Es ist weiterhin vorgesehen, einen oder vorzugsweise mehrere Luftströmungserzeuger, insbesondere Ventilatoren, am oder im Gehäuse anzuordnen. Die Ventilatoren sind vorzugsweise an der Oberseite des Gehäuses angeordnet, und zwar entweder innerhalb desselben oder außen auf einer Deckwandung des Gehäuses. Von außen angesaugte Luft (Kaltluft) wird dann von den Ventilatoren direkt in das Gehäuse gefördert. Die Anzahl, Größe und Leistung der Ventilatoren ist dem zu erzeugenden Luftdruck im Inneren des Gehäuses bzw. Ausströmgeschwindigkeit der zum Trocknen dienenden erwärmten Luft aus der Vorrichtung angepaßt.

Alternativ ist es möglich, die Luftströmungserzeuger, insbesondere Ventilatoren, außerhalb des Gehäuses, und zwar mit Abstand von demselben anzuordnen. Die von den Ventilatoren erzeugte Luftströmung wird dann über Luftzufuhrkanäle wie Rohre oder Schläuche in das Gehäuse geleitet. Auf diese Weise können die Ventilatoren an einem anderen Ort plaziert werden, und zwar so weit, daß im Bereich der eigentlichen Vorrichtung kein oder nur ein verringertes Ventilatorengeräusch auftritt. Die Vorrichtung arbeitet dadurch besonders geräuschlos, was dazu führt, daß die Tiere beim Trocknen keiner nennenswerten Geräuschentwicklung ausgesetzt sind. Eine solche Vorrichtung eignet sich besonders für scheue Tiere.

Es ist des weiteren denkbar, zur Erzeugung einer Luftströmung andere übliche Lufterzeuger wie beispielsweise Kompressoren zu verwenden. Diese sind wegen ihrer im Vergleich zu Ventilatoren höheren Geräuschentwicklung stets abseits von der Vorrichtung plaziert, so daß die erzeugte Luftströmung oder auch Druckluft über ein entsprechendes Leitungssystem zur Vorrichtung gelangt.

Ein bevorzugtes Ausführungsbeispiel der erfindungsgemäßen Vorrichtung wird nachfolgend anhand der Zeichnung näher erläutert. In dieser zeigen:
- Fig. 1: einen Querschnitt durch die Vorrichtung,

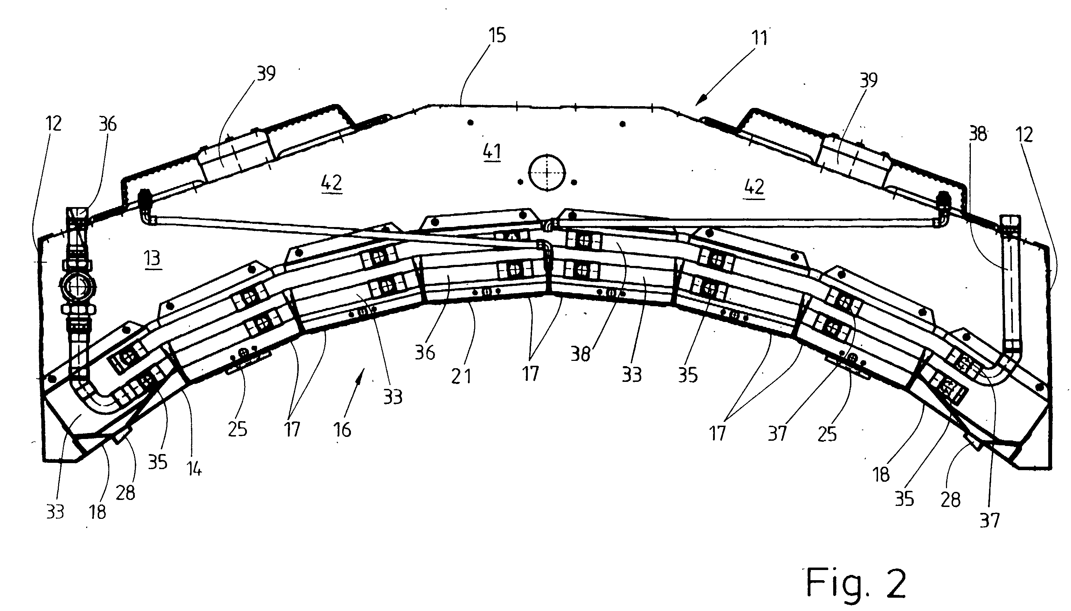

- Fig. 2: eine Stirnansicht der Vorrichtung ohne eine Stirnwandung eines Gehäuses derselben,

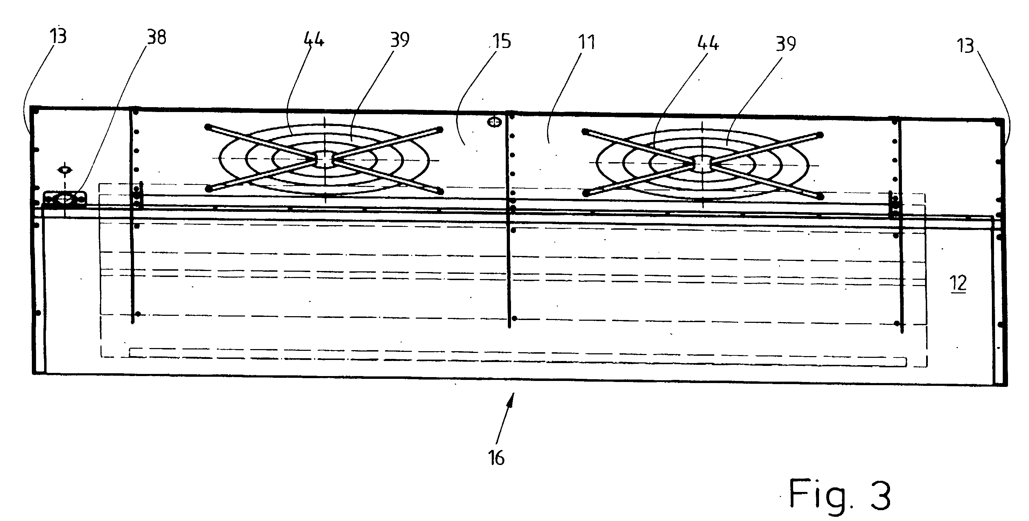

- Fig. 3: eine Seitenansicht der Vorrichtung,
- Fig. 4: eine Draufsicht auf die Vorrichtung,
- Fig. 5: eine Ansicht der Vorrichtung von unten,
- Fig. 6: einen ebenen Zuschnitt einer Bodenpaneele mit Luftaustrittslöchern in einer Ansicht von unten analog zur Fig. 5,
- Fig. 7: einen vergrößerten Querschnitt durch die Bodenpaneele der Fig. 6,

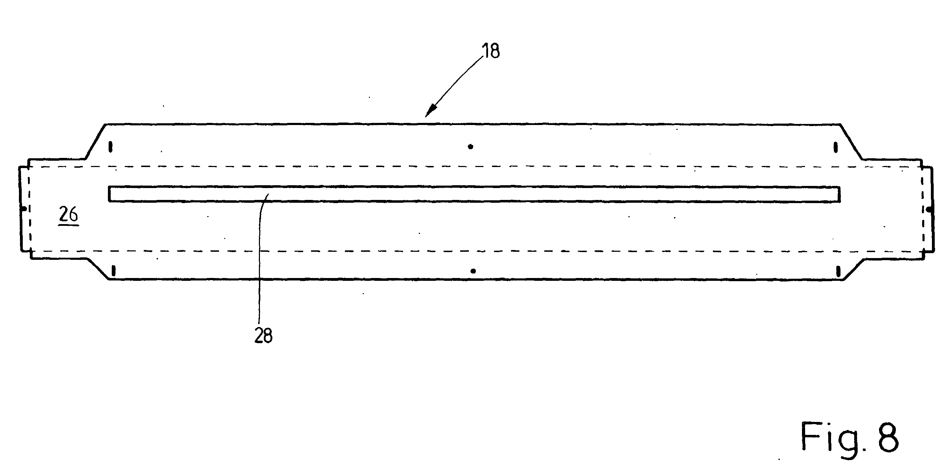

- Fig. 8: einen ebenen Zuschnitt einer Bodenpaneele mit einem länglichen Luftaustrittsschlitz in einer Ansicht von unten analog zur Fig. 5, und
- Fig. 9: einen vergrößerten Querschnitt durch die Bodenpaneele der Fig. 8.

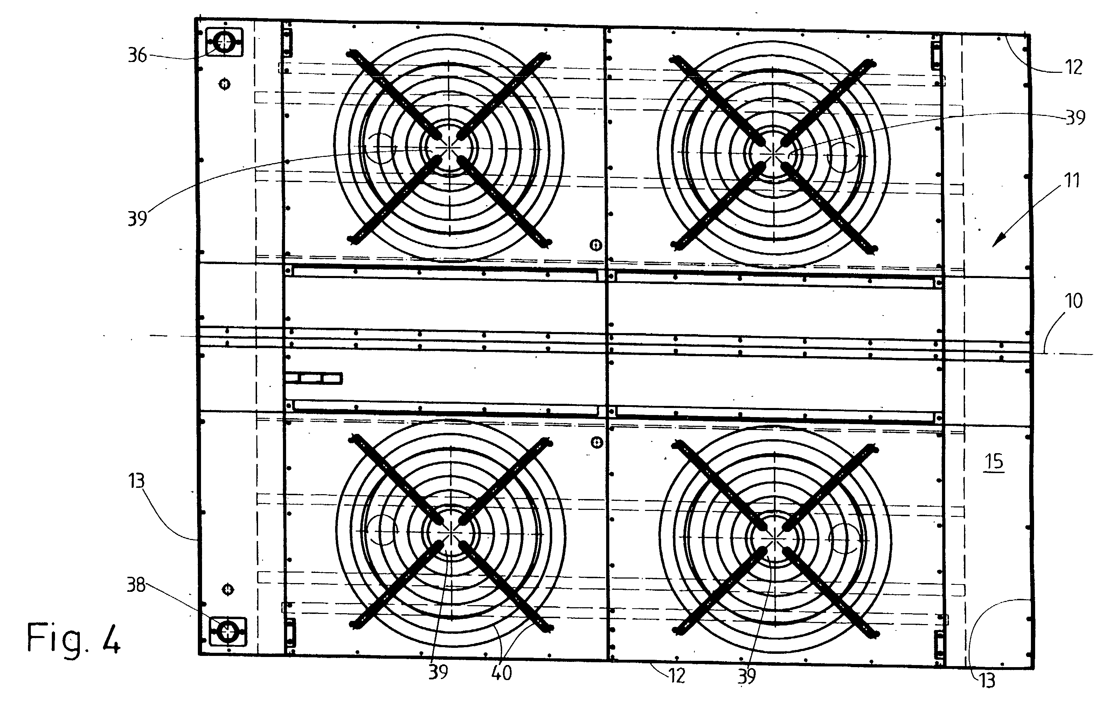

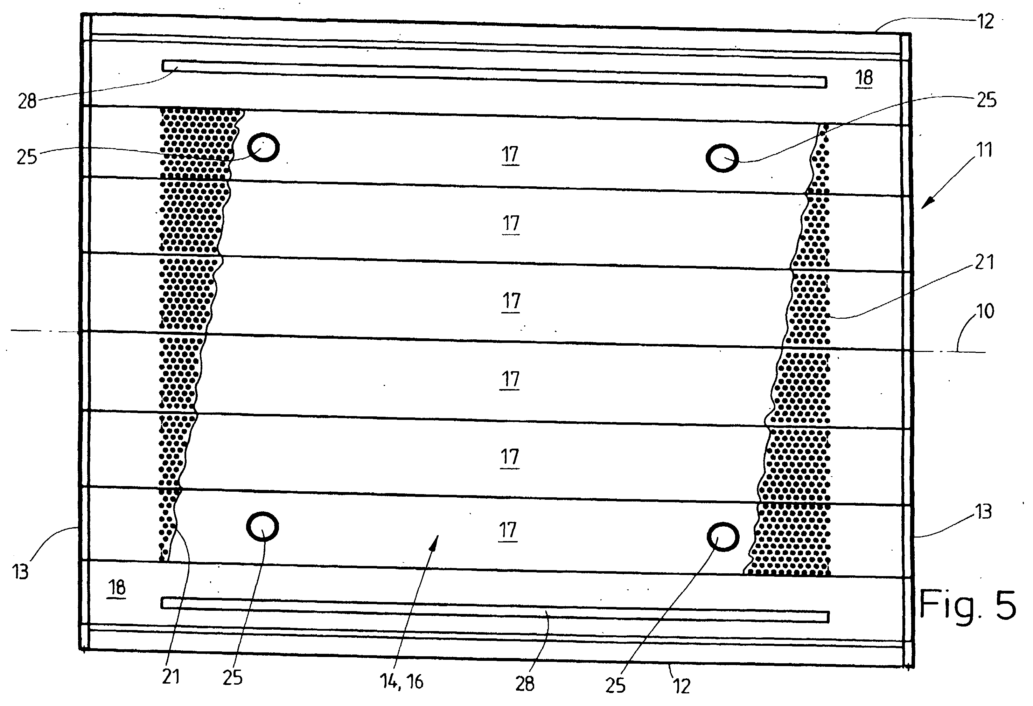

Die in den Figuren gezeigte Vorrichtung dient zum Trocknen von Pferden. Die Vorrichtung wird in einem Raum aufgehängt, und zwar in einer Höhe, in der sie sich mit geringem Abstand über dem Rücken des Pferds befindet. Der Kopf des Pferdes befindet sich demnach vor der Vorrichtung. Das Pferd wird mittig unter der Vorrichtung angeordnet, und zwar bezogen auf eine mittige Längsachse 10 der Vorrichtung (Fig. 4 und 5).

Die Vorrichtung verfügt über ein kastenförmiges Gehäuse 11 mit parallelen, aufrechten Seitenwandungen 12, ebenfalls parallelen und aufrechten Stirnwandungen 13, einer gewölbten Bodenwandung 14 und einer gewölbten Deckwandung 15. Die Bodenwandung 14 und die Deckwandung 15 sind etwa gleichmaßen in einer Richtung, und zwar in Richtung quer zur Längsachse 10, gewölbt, und zwar derart, daß sie zur Mitte hin ansteigen. Von einer Unterseite 16 aus gesehen verfügt die Bodenwandung 14 somit über eine konkave Wölbung. Die Deckwandung 15 verläuft etwa parallel zur Bodenwandung 14. Durch die konkave Wölbung der Unterseite 16 der Bodenwandung 14 ist das Gehäuse 11 ansatzweise von oben um das Pferd herumgeführt.

Die Bodenwandung 14 des Gehäuses 11 wird gebildet aus lückenlos nebeneinander angeordneten Bodenpaneelen 17 und 18. Die Bodenpaneelen 17 und 18 verlaufen durchgehend in Längsrichtung des Gehäuses 11, sind nämlich parallel zur Längsachse 10 ausgerichtet. Im gezeigten Ausführungsbeispiel wird die Bodenwandung 14 gebildet aus sechs inneren Bodenpaneelen 17 und zwei äußeren Bodenpaneelen 18. Die beiden äußeren Bodenpaneelen 18 sind auf gegenüberliegenden Seiten der Gruppe der sechs inneren Bodenpaneelen 17 angeordnet und bilden dadurch äußere Längsrandbereiche des Gehäuses 11.

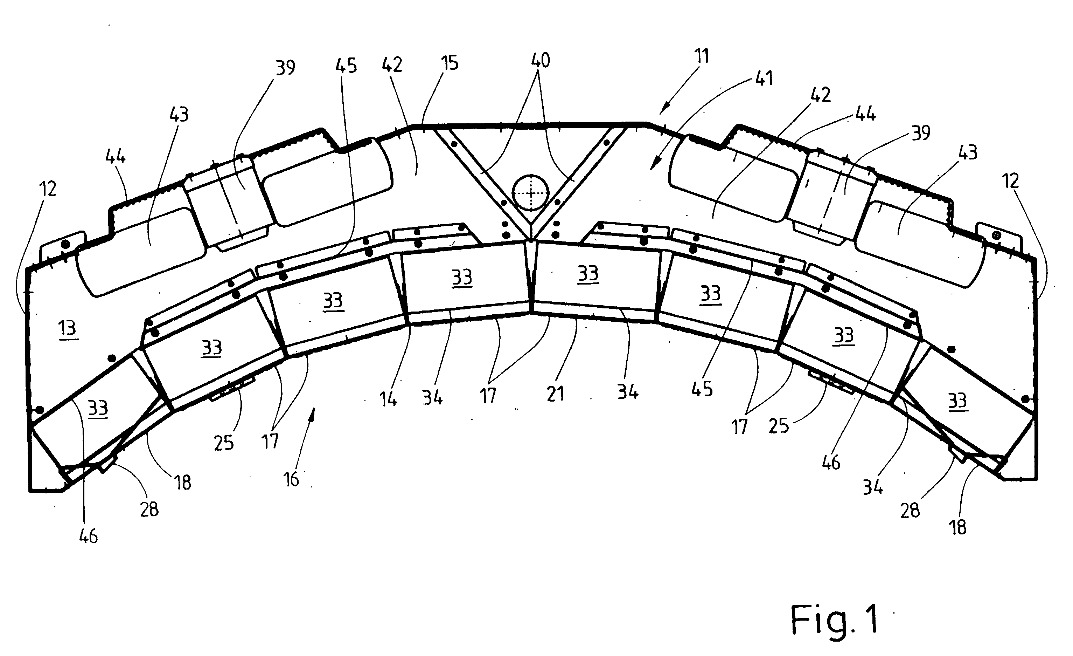

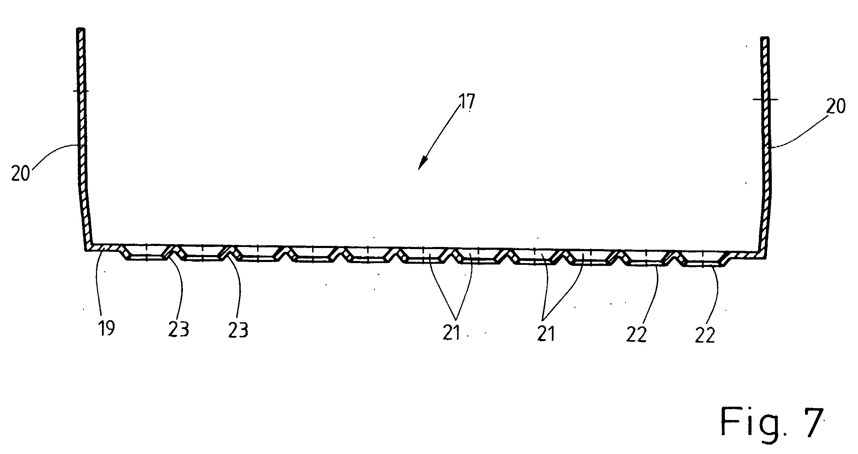

Jede der gleich ausgebildeten inneren Bodenpaneelen 17 verfügt über eine ebene Bodenfläche und zwei von gegenüberliegenden Längsrändern der Bodenflächen 19 ausgehende, parallele Seitenflächen 20. Die parallelen Seitenflächen 20 verlaufen rechtwinklig zur Bodenfläche 19 und weisen ins Innere des Gehäuses 11 (Fig. 1 und 7). Die Bodenfläche 19 der Bodenpaneele 17 ist ganz oder zumindest größtenteils mit Luftaustrittsöffnungen versehen, und zwar Luftaustrittslöchern 21. Die Luftaustrittslöcher 21 sind rasterartig auf die Bodenfläche 19 verteilt, wodurch diese einen siebartigen Charakter erhält. Alle Luftaustrittslöcher 21 sind gleichermaßen ausgebildet. Sie verfügen über eine kreisrundförmige Öffnung 22, die von einer kegelförmigen Wandung 23 umgeben ist. Mit der kegelförmigen Wandung 23 ragen die Öffnungen 22 der Luftaustrittsöffnung 21 gegenüber der Unterseite 16 der Bodenwandung 14 des Gehäuses 11 nach unten vor. Der Abstand benachbarter Luftaustrittslöcher 21 beträgt etwa das Doppelte des Durchmessers einer Öffnung 22. Die Höhe der kegelstumpfförmigen Wandung 23 ist etwa halb so groß wie der Durchmesser der Öffnung 22 (Fig. 7).

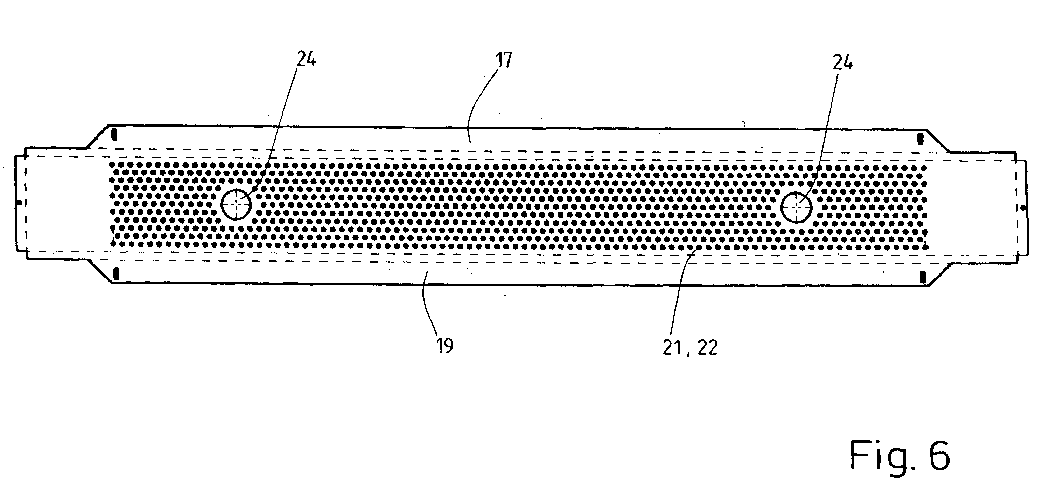

Die Bodenpaneele 17 der Fig. 6 verfügt über zwei größere zylindrische Löcher 24. Jedes dieser Löcher 24 dient zur Aufnahme einer Einbauleuchte 25. Im gezeigten Ausführungsbeispiel sind nur die beiden äußeren Bodenpaneelen 18 mit jeweils zwei Einbauleuchten 25 versehen (Fig. 1). Die vier dazwischenliegenden Bodenpaneelen 17 weisen keine Einbauleuchten 25 auf. Es ist möglich, die Einbauleuchten 25 anders in der Bodenwandung 14 des Gehäuses 11 zu plazieren.

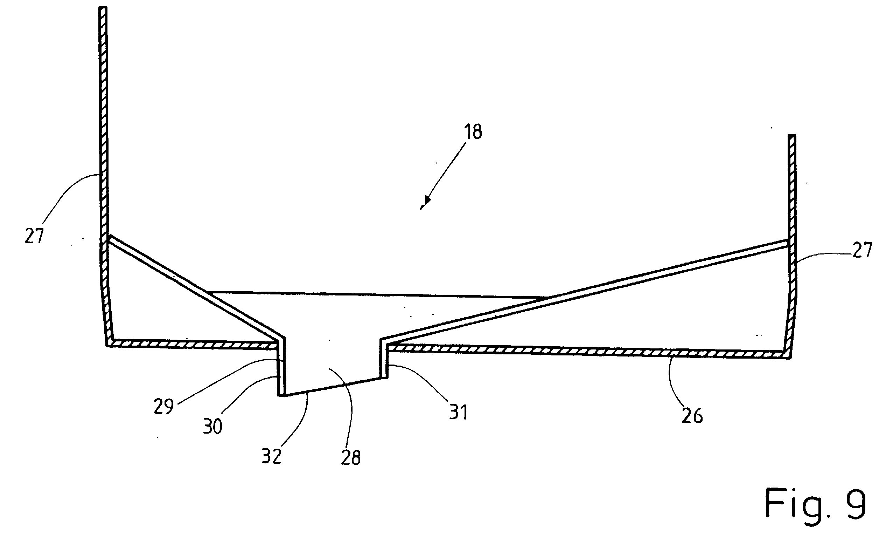

Die äußeren Bodenpaneelen 18 sind ähnlich wie die Bodenpaneelen 17 ausgebildet. Auch die Bodenpaneelen 18 verfügen über eine ebene, rechteckförmige Bodenfläche 26 und zwei gegenüber den Rändern derselben rechtwinklig abgekantete Seitenflächen 27. Die Seitenflächen 27 weisen auch in das Innere des Gehäuses 11. Die Bodenfläche 26 jeder Bodenpaneele 18 verfügt über eine einzige Luftaustrittsöffnung, nämlich einen länglichen Luftaustrittsschlitz 28. Jeder Luftaustrittsschlitz 28 verläuft parallel zur Längsachse 10 des Gehäuses 11, und zwar über nahezu die gesamte Länge der Bodenfläche 26 der Bodenpaneele 18. Die länglichen Luftaustrittsschlitze 28 sind umgeben von einer umlaufenden Wandung 29, die sich senkrecht zur Ebene der Bodenfläche 26 erstreckt. Die Wandung 19 ragt gegenüber der Bodenfläche 26 der Bodenpaneele 18 nach unten vor, weist also aus dem Gehäuse 11 heraus. Parallele, längliche Seitenflächen 30, 31 der Wandung 29 sind unterschiedlich lang. Die zur jeweiligen Seitenwandung 12 des Gehäuses 11 weisende äußere Seitenfläche 30 ist länger als die zur Längsmittelachse weisende innere Seitenfläche 31. Dadurch umgibt ein unterer, freier Rand der umlaufenden Wandung 29 eine längliche Öffnung 32 der Luftaustrittsschlitze 28, die schräg zur Ebene der Bodenfläche 26 verläuft, und zwar so, daß der Winkel der Ebene der Öffnung 32 zur Seitenwandung 12 des Gehäuses 11 spitzer ist als der Winkel der Bodenfläche 26 (Fig. 1 und 9). Durch eine spiegelbildliche Anordnung der Wandungen 29 der Luftaustrittsschlitze 28 der gegenüberliegenden äußeren Bodenpaneelen 18 verlaufen die aus den gegenüberliegenden Luftaustrittsschlitzen 28 austretenden Luftschleier zum Boden hin konvergierend. Die Luftschleier bilden also einen sich zum Boden hin verkleinernden Raum zur Führung der aus den Luftaustrittslöchern 21 der Bodenpaneelen austretenden Warmluft.

Die Bodenpaneelen 17, 18 mit ihren ebenen Bodenflächen 19, 26 sind mit unterschiedlichen Neigungen schrägliegend nebeneinander angeordnet. Auf diese Weise kommt trotz der ebenen Bodenflächen 19, 26 die insgesamt konkav gewölbte Bodenwandung 14 aus den nebeneinanderliegenden Bodenpaneelen 17, 18 zustande.

Die Vorrichtung verfügt des weiteren über mehrere im Inneren des Gehäuses 11 angeordnete Lufterhitzer. Bei der hier gezeigten Vorrichtung sind die Lufterhitzer als Konvektorheizkörper, und zwar insbesondere Plattenkonvektoren 33, ausgebildet. Jeder Bodenpaneele 17 und 18 ist ein länglicher Plattenkonvektor 33 zugeordnet. Allen Plattenkonvektoren 33 sind untereinander gleich ausgebildet. Jeder Plattenkonvektor 33 ist in die betreffende Bodenpaneele 17 bzw. 18 zwischen den Seitenflächen 20 bzw. 27 derselben angeordnet und befestigt. Die Seitenflächen 20 bzw. 27 weisen eine Länge auf, die sich etwa über die halbe Höhe des jeweiligen Plattenkonvektors 33 erstreckt und damit die untere Hälfte derselben seitlich abschirmt und dadurch Kammern zur Aufnahme jeweils eines Plattenkonvektors 33 bildet. Die Plattenkonvektoren 33 sind so in den Bodenpaneelen 17 und 18 angeordnet, daß Unterseiten 34 der Plattenkonvektoren 33 mit geringfügigem Abstand oberhalb der Bodenflächen 19 bzw. 26 der Bodenpaneelen 17, 18 enden (Fig. 1). Die Unterseiten 34 der Plattenkonvektoren 33 verlaufen dabei parallel zu den Bodenflächen 19, 26 der Bodenpaneelen 17, 18. Die in den Figuren nicht gezeigten Wärmetauscherflächen der Plattenkonvektoren 33 verlaufen senkrecht zu den Bodenflächen 19, 26 der Bodenpaneelen 17 und 18, und zwar quer zur Längsachse 10 des Gehäuses 11.

Alle Plattenkonvektoren 33 weisen auf einer Stirnseite in ihrem unteren Bereich einen Anschlußstutzen 35 für eine einzige Vorlaufleitung 36 auf. Die Vorlaufleitung 36 ist mit den Anschlußstutzen 35 aller Plattenkonvektoren 33 verbunden. Die gleichen zu einer Stirnwandung 33 des Gehäuses 11 weisenden Stirnflächen der Plattenkonvektoren 33 weisen in ihrem oberen Bereich jeweils einen weiteren Anschlußstutzen 37 für eine gemeinsame Rücklaufleitung 38 auf. Auch die Anschlußstutzen 37 aller Plattenkonvektoren 33 sind mit der einzigen Rücklaufleitung 38 verbunden. Dadurch sind alle Plattenkonvektoren 33 parallel geschaltet. Über die Vorlaufleitung 36 werden alle Plattenkonvektoren 33 in ihrem unteren Bereich gleichzeitig mit noch nicht abgekühltem Wärmeträgermedium, insbesondere Warmwasser, versorgt. Dieses durchströmt den unteren Bereich aller Plattenkonvektoren 33. An den der Vorlaufleitung 36 und der Rücklaufleitung 38 gegenüberliegenden Stirnseiten sind in den Figuren nicht gezeigte Überströmleitungen angeordnet, durch die das Warmwasser von einer unteren Hälfte in die obere Hälfte der Plattenkonvektoren 33 geleitet und in der oberen Hälfte der Plattenkonvektoren 33 zurückströmt zur gemeinsamen Rücklaufleitung 38. Von dieser wird das abgekühlte Wasser abgeführt zur erneuten Erwärmung.

In der Deckwandung 15 des Gehäuses 11 sind Luftströmungserzeuger angeordnet, bei denen es sich im gezeigten Ausführungsbeispiel um Ventilatoren 39 handelt. Im vorliegenden Falle weist die Vorrichtung vier Ventilatoren 39 auf. Jeweils zwei Ventilatoren 39 sind mit Abstand auf unterschiedlichen Seiten der Deckwandung 15 angeordnet (Fig. 4). Zwischen den beiden Ventilatoren 39 auf jeder Seite der Deckwandung 15 ist eine im gezeigten Ausführungsbeispiel V-förmig ausgebildete Trennwand 40 angeordnet. Die Trennwand 40 unterteilt den Innenraum 41 des Gehäuses 11 oberhalb der Plattenkonvektoren 33 entlang der Längsachse 10 in zwei voneinander getrennte Teilräume 42. Auf diese Weise kann die von den beiden Ventilatoren 39 jeder Hälfte des Gehäuses 11 erzeugte Luftströmung nicht von der einen Hälfte des Gehäuses 11 zur anderen Hälfte überströmen. Die Ventilatoren 39 sind so in der Seitenwandung 12 angeordnet, daß ihre sich drehenden Flügelräder 43 geschützt in den Teilräumen 42 des Gehäuses 11 liegen. Die Rückseite der Flügelräder 43 ist mit einem Schutzgitter 44 versehen, das das Gehäuse 11 außenseitig abdeckt und durch das von den Ventilatoren 39 Außenluft in das Gehäuse hineingesaugt wird. Diese Luft wird vom Innenraum 41 an den Plattenkonvektoren 33 vorbeigeleitet und dabei stufenweise erwärmt, und zwar zunächst im oberen kälteren Teil der Plattenkonvektoren 33 und anschließend im darunterliegenden wärmeren Teil der Plattenkonvektoren 33.

Bei der hier gezeigten Vorrichtung sind dem Innenraum 41 des Gehäuses 11 oberhalb der Plattenkonvektoren 33 Luftverteilungsmittel zugeordnet. Es handelt sich bei dem gezeigten Ausführungsbeispiel um zwei Luftverteilungsbleche 45, von denen eines im jeweiligen Teilraum 42 untergebracht ist. Die gleich ausgebildeten und spiegelverkehrt im Gehäuse 11 angeordneten Luftverteilungsbleche 45 erstrecken sich im gezeigten Ausführungsbeispiel nur über die Bodenpaneelen 17. Die beiden auf gegenüberliegenden Seiten der Längsachse 10 angrenzenden inneren Bodenpaneelen 17 werden im vorliegenden Falle nur zu einem Teil, und zwar etwa Zweidrittel, vom jeweiligen Luftverteilungsblech 45 überdeckt. Die beiden anderen auf jeder Seite der Längsachse 11 folgenden Bodenpaneelen 17 werden vollständig von den Luftverteilungsblechen 45 überdeckt. Die beiden gegenüberliegenden äußeren Bodenpaneelen 18 mit den länglichen Luftaustrittsschlitzen 28 sind von den Luftverteilungsblechen 45 nicht überdeckt. Dieses ist nicht erforderlich, weil sich in den schmalen länglichen Luftaustrittsschlitzen 28 die Luft selbständig soweit verteilt, daß ein geschlossener Luftschleier entsteht. Bei den ein siebartiges Raster von Luftaustrittslöchern 21 aufweisenden Bodenpaneelen 17 führen die Luftverteilungsbleche 45 dazu, daß aus allen Luftaustrittslöchern 21, und zwar auch den rand- und stirnseitigen Luftaustrittslöchern 21, eine nahezu gleiche Luftmenge austritt. Dieses wird erreicht durch eine Perforation in den Flächen der Luftverteilungsbleche 45, indem diese beispielsweise aus einem Lochblech mit einer siebartigen Anordnung gleichmäßig verteilter Löcher gebildet sind. Die Löcher in den Luftverteilungsblechen 45 können beliebige Grundflächen aufweisen.

Die Luftverteilungsbleche 45 verlaufen parallel zur Oberseite 46 der Plattenkonvektoren 33, und zwar im gezeigten Ausführungsbeispiel mit einem geringfügigen Abstand. Dadurch wird erreicht, daß die durch die siebartig angeordneten Löcher in den Luftverteilungsblechen 45 hindurchströhmende Luft sich hinter den Luftverteilungsblechen 45 nochmals vergleichmäßigt zur Bildung eines gleichmäßigen Luftteppichs, der über die gesamte Fläche der den Bodenpaneelen 17 zugeordneten Plattenkonvektoren 33 gleichgerichtet nach unten strömt. Gleichgerichtet bedeutet in diesem Zusammenhang, daß die Luftströmung überall etwa den gleichen Druck,die gleich Strömungsrichtung und nahezu gleiche Strömungsgeschwindigkeit aufweist.

Abweichend vom gezeigten Ausführungsbeispiel ist es auch denkbar, die Luftverteilungsbleche so auszubilden, daß sie alle mit Luftaustrittslöchern 21 versehenen Bodenpaneelen 17 vollständig überdecken. Ebenfalls ist es denkbar, die Luftverteilungsbleche 45 auch in den Bereichen der äußeren Bodenpaneelen 18 mit länglichen Luftaustrittsschlitzen 28 anzuordnen.

Die beschriebene Vorrichtung arbeitet wie folgt:

Von den Ventilatoren 39 in der Deckwandung 15 wird Umgebungsluft mit Raumtemperatur in jeden der beiden Teilräume 42 im Gehäuse 11 transportiert. Angesaugt wird eine solche Luftmenge, daß im Gehäuse 11, das bis auf die Luftaustrittslöcher 21 und die Luftaustrittsschlitze 28 luftdicht ausgebildet ist, sich ein entsprechender (leichter) Überdruck aufbaut.

Die angesaugte Luft gelangt direkt zu den den äußeren Bodenpaneelen 18 mit länglichen Luftaustrittsschlitzen 28 zugeordneten Plattenkonvektoren 33. Zu den übrigen Plattenkonvektoren 33 gelangt die Luft erst, nachdem sie die Löcher der siebartig ausgebildeten Luftverteilungsbleche 45 durchströmt und sich dabei auf der Unterseite der Luftaustrittsbleche 45 vergleichmäßigt hat, und zwar nicht nur mengenmäßig, sondern auch hinsichtlich der Strömungsrichtung, Strömungsgeschwindigkeit und des Drucks. Nach dem Passieren der Luftverteilungsbleche 45 gelangt die vergleichmäßigte Luft zu den den innenliegenden Bodenpaneelen 17 zugeordneten Plattenkonvektoren 33.

Die Luft wird an allen Plattenkonvektoren 33 in zwei Stufen erwärmt, nämlich zunächst an der vom zurückfließenden Heißmedium durchströmten oberen Hälfte der Plattenkonvektoren 33 und anschließend in unteren Bereichen der Plattenkonvektoren 33, die vom zufließenden und erst wenig abgekühlten Wärmeträgermedium durchströmt werden. Die Wärmeaustauschplatten der Plattenkonvektoren 33 wirken sich ebenfalls vergleichmäßigend auf die an den Plattenkonvektoren 33 vorbeiströmende Luft aus.

Von den Plattenkonvektoren 33 gelangt die erwärmte Luft in einen schmalen Spaltraum zwischen den Unterseiten 34 der Plattenkonvektoren 33 und den Innenseiten der Bodenwandung 14 des Gehäuses 11. Die erwärmte Luft tritt durch die gegenüberliegenden äußeren Luftaustrittsschlitze 28 der Bodenpaneelen 18 aus und bildet dabei einen Warmluftschleier. Durch die Schrägstellung der Luftaustrittsschlitze 28 in den Bodenpaneelen 18 erhalten die Warmluftschleier einen leicht zur Vertikalen geneigten Verlauf, und zwar derart, daß die aus den gegenüberliegenden Luftaustrittsschlitzen 28 austretenden Luftschleier zum Boden hin konvergieren. Es entsteht also zwischen den beiden äußeren Luftschleiern ein zum Boden hin schmaler werdender Raum. Dieser dient als Trocknungsraum für das jeweilige Pferd. Der Trocknungsraum wird versorgt mit Warmluft, die durch die Luftaustrittslöcher 21 der Bodenpaneelen 17 austritt. Durch die siebartige Ausbildung der Bodenflächen 19 der Bodenpaneelen 17 tritt unten aus dem Gehäuse 11 ein gleichmäßiger Warmluftteppich aus. Durch die Ausbildung der Luftaustrittslöcher 21 als Düsen, die einen diffusen Warmluftschleier erzeugen, füllt die durch die Luftaustrittslöcher 21 der Bodenpaneelen 17 austretende Luft den zwischen den Warmluftschleiern gebildeten Trockenraum unter dem Gehäuse 11 vollflächig und gleichmäßig aus. Die aus den Luftaustrittslöchern 21 auströmende Warmluft strömt geführt von den Warmluftschleiern an gegenüberliegenden Längsseiten der Vorrichtung nach unten und wird dabei im durch den zum Boden hin schmaler werdenden Trockenraum (infolge der konvergierenden Warmluftschleier) beschleunigt, so daß auch im Fußbereich des jeweils zu trocknenden Pferdes noch eine zum wirksamen Trocknen ausreichende Srömungsgeschwindigkeit der Warmluft gegeben ist.

Da der Trocknungsraum nur an gegenüberliegenden Längsseiten der Vorrichtung durch die Warmluftschleier begrenzt ist, kann er durch die quer dazu verlaufenden Stirnseiten aus dem zwischen den Warmluftschleiern gebildeten Trockenraum austreten. Auf diese Weise kann mit Feuchtigkeit angereicherte und sich abgekühlte Luft aus dem Trockenraum austreten und trockene Warmluft aus den Luftaustrittslöchern 21 in den Trockenraum nachströmen.

Die beschriebene Vorrichtung eignet sich auch zum Trocknen anderer Tiere wie Ponys oder dergleichen.

### Bezugszeichenliste:

- 10: Längsachse
- 11: Gehäuse
- 12: Seitenwandung
- 13: Stirnwandung
- 14: Bodenwandung
- 15: Deckwandung
- 16: Unterseite
- 17: Bodenpaneele
- 18: Bodenpaneele
- 19: Bodenfläche
- 20: Seitenfläche
- 21: Luftaustrittsloch
- 22: Öffnung
- 23: Wandung
- 24: Loch
- 25: Einbauleuchte
- 26: Bodenfläche
- 27: Seitenfläche
- 28: Luftaustrittsschlitz
- 29: Wandung
- 30: Seitenfläche
- 31: Seitenfläche
- 32: Öffnung
- 33: Plattenkonvektor
- 34: Unterseite
- 35: Anschlußstutzen
- 36: Vorlaufleitung
- 37: Anschlußstutzen
- 38: Rücklaufleitung
- 39: Ventilator
- 40: Trennwand
- 41: Innenraum
- 42: Teilraum
- 43: Flügelrad
- 44: Schutzgitter
- 45: Luftverteilungsblech
- 46: Oberseite

## Patentansprüche

1. Vorrichtung zum Trocknen von Tieren, insbesondere Pferden, Ponys oder dergleichen, mit wenigstens einem Luftströmungserzeuger und einem an einer Unterseite (16) Luftaustrittsöffnungen aufweisenden Gehäuse (11), in dem Lufterhitzer und mindestens ein Luftverteilungsmittel angeordnet sind, wobei das mindestens eine Luftverteilungsmittel in Strömungsrichtung der Luft vor den Lufterhitzem angeordnet ist.

2. Vorrichtung nach Anspruch 1, **dadurch gekennzeichnet, dass** das mindestens eine Luftverteilungsmittel derart vor den Lufterhitzern angeordnet ist, dass die Luft erst nach dem Passieren des mindestens einen Luftverteilungsmittels zu den Lufterhitzern gelangt.

3. Vorrichtung nach einem der vorhergehenden Ansprüche, **dadurch gekennzeichnet, dass** das oder jedes Luftverteilungsmittel als ein Luftverteilungsblech (45) mit einer Vielzahl von Luftaustrittsöffnungen ausgebildet ist, wobei vorzugsweise die Luftaustrittsöffnungen im jeweiligen Luftverteilungsblech (45) gleichmäßig verteilt angeordnet sind, insbesondere das jeweilige Luftverteilungsblech (45) eine siebartige Fläche aufweist.

4. Vorrichtung nach einem der vorhergehenden Ansprüche, **dadurch gekennzeichnet, dass** die Unterseite (16) des Gehäuses (11) unterschiedliche Luftaustrittsöffnungen aufweist, insbesondere Bereiche gegenüberliegender Längsränder einer die Unterseite (16) des Gehäuses (11) bildenden Bodenwandung (14) des Gehäuses (11) mindestens jeweils eine als Luftaustrittsschlitz (28) ausgebildete Luftaustrittsöffnung aufweist und die Bodenwandung (14) des Gehäuses (11) zwischen den gegenüberliegenden Luftaustrittsschlitzen (28) eine Vielzahl von als Luftaustrittslöcher (21) ausgebildete Luftaustrittsöffnungen aufweisen, die vorzugsweise in einem innenliegenden Bereich der Bodenwandung (14) rasterartig verteilt angeordnet sind.

5. Vorrichtung nach einem der vorhergehenden Ansprüche, **dadurch gekennzeichnet, dass** die Luftaustrittsschlitze (28) und/oder die Luftaustrittslöcher (21) als Düsen ausgebildet sind, insbesondere die seitlichen Luftaustrittsschlitze (28) als Flachstrahldüsen ausgebildet sind zur Erzeugung eines dünnen Luftschleiers, vorzugsweise Warmluftschleiers, an gegenüberliegenden Längsseiten des Gehäuses (11) und die Luftaustrittslöcher (21) zur Erzeugung eines diffusen Luftstrahls, insbesondere eines sich kegelartig erweiternden Warmluftstrahls, ausgebildet sind.

6. Vorrichtung nach einem der vorhergehenden Ansprüche, **dadurch gekennzeichnet, dass** die Bodenwandung (14) des Gehäuses (11) in Querrichtung desselben bogenförmig mit konkaver Unterseite (16) ausgebildet ist.

7. Vorrichtung nach einem der vorhergehenden Ansprüche, **dadurch gekennzeichnet, dass** die Lufterhitzer als Konvektoren, insbesondere Plattenkonvektoren (33), ausgebildet sind, vorzugsweise mehrere in Längsrichtung des Gehäuses (11) verlaufende Konvektoren, insbesondere Plattenkonvektoren (33), nebeneinanderliegend angeordnet sind.

8. Vorrichtung nach einem der vorhergehenden Ansprüche, **dadurch gekennzeichnet, dass** die Konvektoren, insbesondere Plattenkonvektoren (33), über den Luftaustrittslöchem (21) und/oder den Luftaustrittsschlitzen (28) angeordnet sind, insbesondere mit Abstand über den Luftaustrittslöchern (21) und/ oder Luftaustrittsschlitzen (28).

9. Vorrichtung nach einem der vorhergehenden Ansprüche, **dadurch gekennzeichnet, dass** die Luftverteilungsbleche (45) über den Konvektoren (Plattenkonvektoren 33) angeordnet sind, vorzugsweise mit Abstand über den Konvektoren (Plattenkonvektoren 33), und/oder über den Luftverteilungsblechen (45) die Luftströmungserzeuger angeordnet sind, vorzugsweise mit Abstand über den Luftverteilungsblechen (45).

10. Vorrichtung nach einem der vorhergehenden Ansprüche, **dadurch gekennzeichnet, dass** mindestens die den Luftaustrittslöchem (21) zugeordneten Konvektoren (Plattenkonvektoren 33) ganz oder teilweise in einer gemeinsamen Kammer oder jeweils einer eigenen Kammer innerhalb des Gehäuses (11) angeordnet sind.

11. Vorrichtung nach einem der vorhergehenden Ansprüche, **dadurch gekennzeichnet, dass** die von den Lufterzeugern erzeugte strömende Luft durch die Luftverteilungsbleche (45) zu mindestens einem Teil der Konvektoren (Plattenkonvektoren 33) strömt, vorzugsweise zu den den Luftaustrittslöchem (21) zugeordneten Konvektoren (Plattenkonvektoren 33).

12. Vorrichtung nach einem der vorhergehenden Ansprüche, **dadurch gekennzeichnet, dass** die Lufterzeuger als Ventilatoren (39) ausgebildet sind, die der Oberseite des Gehäuses (11) zugeordnet sind, vorzugsweise in einer Deckwandung (15) des Gehäuses (11) angeordnet sind oder die vorzugsweise als Ventilatoren (39) ausgebildeten Lufterzeuger vom Gehäuse (11) getrennt außerhalb des Bereichs des Gehäuses (11) angeordnet und über Luftzuführkanäle mit dem Gehäuse (11) verbunden sind.

13. Vorrichtung nach einem der vorhergehenden Ansprüche, **dadurch gekennzeichnet, dass** die Konvektoren (Plattenkonvektoren (33) zur Versorgung mit Wärmeträgermedium (Vorlauf) und/oder zur Abfuhr des abgekühlten Wärmeträgermediums (Rücklauf) parallelgeschaltet sind, wobei vorzugsweise das Wärmeträgermedium am unteren Bereich der Konvektoren (Plattenkonvektoren 33) zuführbar ist und die Ableitung des abgekühlten Wärmeträgermediums über einen oberen Bereich der Konvektoren (Plattenkonvektoren 33) erfolgt.

14. Vorrichtung zum Trocknen von Tieren, insbesondere Pferden, mit einem Gehäuse (11), im Gehäuse (11) angeordneten Mitteln zur Erwärmung eines Luftstroms und mit Luftaustrittsöffnungen in einer Unterseite (16) des Gehäuses (11), wobei die aus den Luftaustrittsöffnungen austretende warme Luft unter dem Gehäuse (11) einen an mindestens zwei Seiten durch Luftschleier begrenzten Trockenraum für das mindestens teilweise unter dem Gehäuse (11) anzuordnende Tier bildet.

15. Vorrichtung nach Anspruch 14, **dadurch gekennzeichnet, dass** der Trockenraum an mindestens zwei gegenüberliegenden Seiten durch zum Boden hin konvergierende Luftschleier begrenzt ist.

## Claims

1. Apparatus for drying animals, in particular horses, ponies or the like, having at least one air-flow generator and a housing (11) which has air-outlet openings on an underside (16) and in which air heaters and at least one air-distributing means are arranged, the at least one air-distributing means being arranged upstream of the air heaters, as seen in the flow direction of the air.

2. Apparatus according to Claim 1, **characterized in that** the at least one air-distributing means is arranged upstream of the air heaters such that the air only reaches the air heaters after passing through the at least one air-distributing means.

3. Apparatus according to one of the preceding claims, **characterized in that** the or each air-distributing means is designed as an air-distributing plate (45) with a multiplicity of air-outlet openings, the air-outlet openings preferably being distributed uniformly in the respective air-distributing plate (45), in particular the respective air-distributing plate (45) has a sieve-like surface.

4. Apparatus according to one of the preceding claims, **characterized in that** the underside (16) of the housing (11) has different air-outlet openings, in particular regions of opposite longitudinal borders of a base wall (14) of the housing (11), said base wall forming the underside (16) of the housing (11), have at least in each case one air-outlet opening designed as an air-outlet slit (28) and, between the opposite air-outlet slits (28), the base wall (14) of the housing (11) has a multiplicity of air-outlet openings designed as air-outlet holes (21), which are preferably distributed in a grid-like manner in an inner region of the base wall (14).

5. Apparatus according to one of the preceding claims, **characterized in that** the air-outlet slits (28) and/or the air-outlet holes (21) are designed as nozzles, in particular the lateral air-outlet slits (28) are designed as flat-jet nozzles in order to generate a thin air curtain, in particular hot-air curtain, on opposite longitudinal sides of the housing (11), and the air-outlet holes (21) are designed for generating a diffuse air jet, in particular a hot-air jet which widens in the manner of a cone.

6. Apparatus according to one of the preceding claims, **characterized in that** the base wall (14) of the housing (11) is of arcuate design with a concave underside (16) in the transverse direction of the same.

7. Apparatus according to one of the preceding claims, **characterized in that** the air heaters are designed as convectors, in particular plate convectors (33), preferably a plurality of convectors, in particular plate convectors (33), running in the longitudinal direction of the housing (11) being arranged one beside the other.

8. Apparatus according to one of the preceding claims, **characterized in that** the convectors, in particular plate convectors (33), are arranged above the air-outlet holes (21) and/or the air-cutlet slits (28), in particular at a distance above the air-cutlet holes (21) and/or air-outlet slits (28).

9. Apparatus according to one of the preceding claims, **characterized in that** the air-distributing plates (45) are arranged above the convectors (plate convectors 33), preferably at a distance above the convectors (plate convectors 33), and/or the air-flow generators are arranged above the air-distributing plates (45), preferably at a distance above the air-distributing plates (45).

10. Apparatus according to one of the preceding claims, **characterized in that** at least the convectors (plate convectors 33) assigned to the air-outlet holes (21) are arranged completely or in part in a common chamber or in each case a separate chamber within the housing (11).

11. Apparatus according to one of the preceding claims, **characterized in that** the flowing air generated by the air generators flows through the air-distributing plates (45) to at least some of the convectors (plate convectors 33), preferably to the convectors (plate convectors 33) assigned to the air-outlet holes (21).

12. Apparatus according to one of the preceding claims, **characterized in that** the air generators are designed as fans (39) which are assigned to the top side of the housing (11), preferably are arranged in a top wall (15) of the housing (11) the air generators, which are preferably designed as fans (39), are arranged separately from the housing (11), outside the region of the housing (11), and are connected to the housing (11) via air-feed ducts.

13. Apparatus according to one of the preceding claims, **characterized in that** the convectors (plate convectors 33) are arranged in parallel for the supply with heat transfer medium (flow) and/or for discharging the cooled heat transfer medium (return), it being the case that the heat transfer medium can preferably be fed to the bottom region of the convectors (plate convectors 33), and the cooled heat transfer medium is led away via a top region of the convectors (plate convectors 33).

14. Apparatus for drying animals, in particular horses, having a housing (11), having means arranged in the housing (11) for heating an air stream, and having air-outlet openings in an underside (16) of the housing (11), the hot air passing out of the air-outlet openings, forming, beneath the housing (11), a drying space which is bounded on at least two sides by air curtains and is intended for the animal, which is to be positioned at least partly beneath the housing (11).

15. Apparatus according to Claim 14, **characterized in that** the drying space is bounded on a least two opposite sides by air curtains converging in the direction of the ground.

## Revendications

1. Dispositif de séchage d'animaux, en particulier de chevaux, poneys ou animaux semblables, comportant au moins un générateur de courant d'air et une boîte (11) qui présente des orifices de sortie d'air sur un côté inférieur (16) et dans laquelle sont montés des réchauffeurs d'air et au moins un moyen de répartition d'air, le ou les moyen(s) de répartition d'air étant placé(s), dans le sens d'écoulement de l'air, en amont des réchauffeurs d'air.

2. Dispositif selon la revendication 1, **caractérisé par le fait que** le ou les moyen(s) de répartition d'air est ou sont placé(s) en amont des réchauffeurs d'air de façon telle que l'air arrive aux réchauffeurs d'air seulement après avoir traversé le ou les moyen(s) de répartition d'air.

3. Dispositif selon l'une des revendications précédentes, **caractérisé par le fait que** le ou chaque moyen de répartition d'air est constitué d'une plaque de répartition d'air (45) ayant un grand nombre d'orifices de sortie d'air, et de préférence, les orifices de sortie d'air sont uniformément répartis dans la plaque de répartition d'air (45) correspondante, en particulier, cette plaque (45) présente une surface du genre tamis.

4. Dispositif selon l'une des revendications précédentes, **caractérisé par le fait que** le côté inférieur (16) de la boîte (11) présente des orifices de sortie d'air différents, en particulier, des zones de bords longitudinaux opposés d'une paroi de fond (14) de la boîte (11) formant le côté inférieur (16) de cette dernière présentent chacune un orifice de sortie d'air constitué d'une fente (28) et la paroi de fond (14) de la boîte (11) présente entre les fentes opposées de sortie d'air (28) un grand nombre d'orifices de sortie d'air constitués de trous (21) et qui, de préférence, sont répartis à la manière d'un réseau dans une partie intérieure de la paroi de fond (14).

5. Dispositif selon l'une des revendications précédentes, **caractérisé par le fait que** les fentes de sortie d'air (28) et/ou les trous de sortie d'air (21) sont constitués de buses, en particulier, les fentes latérales de sortie d'air (28) sont constituées de buses à jet plat pour la production d'un voile mince d'air, de préférence d'air chaud, sur les côtés longitudinaux opposés de la boîte (11) et les trous de sortie d'air (21) sont faits pour produire un jet d'air diffus, en particulier un jet d'air chaud qui s'élargit à la manière d'un cône.

6. Dispositif selon l'une des revendications précédentes, **caractérisé par le fait que** la paroi de fond (14) de la boîte (11) est arquée dans sa direction transversale avec côté inférieur concave (16).

7. Dispositif selon l'une des revendications précédentes, **caractérisé par le fait que** les réchauffeurs d'air sont constitués de convecteurs, en particulier de convecteurs à plaques (33), et de préférence, plusieurs convecteurs, en particulier convecteurs à plaques (33), s'étendant dans la direction longitudinale de la boîte (11) sont placés les uns à côté des autres.

8. Dispositif selon l'une des revendications précédentes, **caractérisé par le fait que** les convecteurs, en particulier les convecteurs à plaques (33) sont placés au-dessus des trous de sortie d'air (21) et/ou des fentes de sortie d'air (28), en particulier à distance au-dessus des trous de sortie d'air (21) et/ou des fentes de sortie d'air (28).

9. Dispositif selon l'une des revendications précédentes, **caractérisé par le fait que** les plaques de répartition d'air (45) sont placées au-dessus des convecteurs (convecteurs à plaques 33), de préférence à distance au-dessus de ceux-ci, et/ou les générateurs de courant d'air sont placés au-dessus des plaques de répartition d'air (45), de préférence à distance au-dessus de celles-ci.

10. Dispositif selon l'une des revendications précédentes, **caractérisé par le fait qu'**au moins les convecteurs (convecteurs à plaques 33) associés aux trous de sortie d'air (21) sont placés entièrement ou partiellement dans une chambre commune ou chacun dans une chambre propre à l'intérieur de la boîte (11).

11. Dispositif selon l'une des revendications précédentes, **caractérisé par le fait que** l'air en courant produit par les générateurs d'air va à travers les plaques de répartition d'air (45) à au moins une partie des convecteurs (convecteurs à plaques 33), de préférence aux convecteurs (convecteurs à plaques 33) associés aux trous de sortie d'air (21).

12. Dispositif selon l'une des revendications précédentes, **caractérisé par le fait que** les générateurs d'air sont constitués de ventilateurs (39) qui sont associés au côté supérieur de la boîte (11), de préférence sont placés dans une paroi de couverture (15) de la boîte (11), ou les générateurs d'air constitués de préférence de ventilateurs (39) sont placés séparés de la boîte (11) à l'extérieur de la zone de celle-ci et reliés à la boîte (11) par des conduits d'amenée d'air.

13. Dispositif selon l'une des revendications précédentes, **caractérisé par le fait que** les convecteurs (convecteurs à plaques 33), pour l'alimentation en fluide caloporteur (aller) et/ou pour l'évacuation du fluide caloporteur refroidi (retour), sont montés en parallèle, et de préférence, le fluide caloporteur peut être amené sur la partie inférieure des convecteurs (convecteurs à plaques 33) et l'évacuation du fluide caloporteur refroidi se fait par une partie supérieure des convecteurs (convecteurs à plaques 33).

14. Dispositif de séchage d'animaux, en particulier de chevaux, comportant une boîte (11), des moyens de réchauffage d'un courant d'air placés dans la boîte (11) et des orifices de sortie d'air dans un côté inférieur (16) de la boîte (11), l'air chaud qui sort des orifices de sortie d'air formant sous la boîte (11) un espace de séchage, limité sur au moins deux côtés par des voiles d'air, pour l'animal à placer au moins partiellement sous la boîte (11).

15. Dispositif selon la revendication 14, **caractérisé par** le fait-que l'espace de séchage est limité sur au moins deux côtés opposés par des voiles d'air qui convergent vers le fond.
